# EUROPEAN PATENT APPLICATION

(11) **EP 4 831 735 A1**
(43) Date of publication of application: **28.10.2026**
(21) Application number: 26173860.3
(22) Date of filing: 22.04.2026
(51) Int. Cl.: G03B 21/14, H04N 9/31

(54) **CONTROL METHOD FOR PROJECTION DEVICE AND PROJECTION DEVICE**

(30) Priority: 23.04.2025 CN 202510522998
(71) Applicant: Anker Innovations Technology Co., Ltd., Changsha, Hunan 410221 (CN)
(72) Inventor: SHEN, Pidong, Shenzhen (CN); NIE, Qingchun, Shenzhen (CN); ZHENG, Huihe, Shenzhen (CN)
(74) Representative: Steffens, Adrian

(57) **Abstract**

The present application relates to a control method for a projection device and a projection device. The method includes: obtaining a target throw ratio of the projection device; determining a target zoom position corresponding to the target throw ratio based on a preset zoom mapping relationship between throw ratios and zoom positions; and controlling the zoom lens set (22) to perform zoom motion, and sensing a zoom magnetic signal through the zoom detection assembly (30) during the zoom motion until the zoom magnetic signal reflects that the zoom lens set (22) has reached the target zoom position, wherein the zoom magnetic signal has a periodic variation characteristic. In the control method, by determining the corresponding target zoom position from the preset zoom mapping relationship based on the target throw ratio, the control efficiency of the projection device can be effectively improved. Moreover, by determining that the zoom lens set (22) has reached the target zoom position based on the zoom magnetic signal, the control accuracy and zooming accuracy of the projection device can be improved.

## Description

### Field

The present disclosure relates to the technical field of projection, and in particular, to a control method for a projection device and a projection device.

### Background

A projection device, also known as a projecting apparatus or a projector, is an optical instrument that can project images or videos onto a screen for display. With the development of technology, projection devices have been increasingly used in people's daily production, life, and learning.

The zooming function of existing projection devices relies on software to crop and interpolate images, resulting in significant losses in image quality and failing to meet the requirements of high-quality projection. Additionally, after zooming, multiple focusing measurements need to be triggered, or manual adjustment is required for focusing, making the control process cumbersome and time-consuming.

### Summary

In view of this, a control method for a projection device and a projection device are provided according to the independent claims for the above technical problems. The dependent claims refer to further embodiments.

In a first aspect, the present disclosure provides a control method for a projection device, where a projection lens of the projection device includes a zoom lens set, a focus lens set, and a zoom detection assembly, and the method includes at least one of or each of:
obtaining a target throw ratio of the projection device;
determining a target zoom position corresponding to the target throw ratio based on a preset zoom mapping relationship between throw ratios and zoom positions; and
controlling the zoom lens set to perform zoom motion, and sensing a zoom magnetic signal through the zoom detection assembly during the zoom motion until the zoom magnetic signal reflects that the zoom lens set has reached the target zoom position, where the zoom magnetic signal has a periodic variation characteristic.

In a second aspect, the present disclosure further provides a projection device, where the projection device includes a projection lens, and the projection lens includes a lens barrel, an optical lens set, and a zoom detection assembly, where at least one of or each of are provided:
the optical lens set is located inside the lens barrel, the optical lens set has a first optical axis, the optical lens set includes a zoom lens set and a focus lens set arranged along an extension direction of the first optical axis, and both the zoom lens set and the focus lens set can slide relative to the lens barrel along the extension direction of the first optical axis;
the zoom detection assembly includes a zoom motion component and a zoom detection component, one of the zoom motion component and the zoom detection component is connected to the zoom lens set and follows the movement of the zoom lens set for zooming, the other one of the zoom motion component and the zoom detection component is fixed relative to the lens barrel, and the zoom detection component is configured to cooperate with the zoom motion component to detect a movement distance of the zoom lens set relative to the lens barrel; and
the projection device is configured to obtain a target throw ratio of the projection device, determine a target zoom position corresponding to the target throw ratio based on a preset zoom mapping relationship between throw ratios and zoom positions, control the zoom lens set to perform zoom motion, and sense a zoom magnetic signal through the zoom detection assembly during the zoom motion until the zoom magnetic signal reflects that the zoom lens set has reached the target zoom position, where the zoom magnetic signal has a periodic variation characteristic.

According to the control method for the projection device and the projection device, the projection lens of the projection device includes the zoom lens set, the focus lens set, and the zoom detection assembly. The target throw ratio of the projection device is obtained, the target zoom position corresponding to the target throw ratio is determined based on the preset zoom mapping relationship between throw ratios and zoom positions, the zoom lens set is controlled to perform zoom motion, and the zoom magnetic signal is sensed through the zoom detection assembly during the zoom motion until the zoom magnetic signal reflects that the zoom lens set has reached the target zoom position, where the zoom magnetic signal has the periodic variation characteristic. In the control method, by determining the corresponding target zoom position from the preset zoom mapping relationship based on the target throw ratio, the control efficiency of the projection device can be effectively improved. Moreover, by determining that the zoom lens set has reached the target zoom position based on the zoom magnetic signal, the control accuracy and zooming accuracy of the projection device can be improved.

The zoom detection assembly may comprise a zoom detection component and a zoom motion component. The zoom motion component may preferably comprise or be a first magnet. The first magnet may for example be composed of multiple segments of magnetic blocks connected along an optical axis of the projection lens.

During the movement of the zoom lens set, the zoom detection component may detect periodically varying zoom magnetic signals generated by the first magnet.

The periodically varying zoom magnetic signals may exhibit a sinusoidal periodic variation characteristic.

The determining of a target zoom position corresponding to the target throw ratio based on a preset zoom mapping relationship between throw ratios and zoom positions may comprise: determining a target zoom magnetic signal value of the target zoom position based on the zoom mapping relationship.

The controlling the zoom lens set to perform zoom motion, and sensing a zoom magnetic signal (through the zoom detection assembly during the zoom motion until the zoom magnetic signal reflects that the zoom lens set has reached the target zoom position) may comprise: determining, based on a current zoom magnetic signal of the zoom lens set and periodic variation data of the zoom magnetic signal, that the zoom lens set has reached the target zoom position when the zoom magnetic signal reaches the target zoom magnetic signal value.

The controlling the zoom lens set to perform zoom motion (until the zoom magnetic signal reflects that the zoom lens set has reached the target zoom position) may comprise at least one of or each of:
- driving the zoom lens set to move through a zoom drive mechanism associated with the zoom lens set;
- obtaining a zoom position deviation between a current position of the zoom lens set and the target zoom position; and
- determining that the zoom lens set enters a position area corresponding to the target zoom position when the zoom position deviation is less than a preset position deviation.

The method may further comprise controlling the focus lens set to move to a target focus position corresponding to the target throw ratio based on a preset focus mapping relationship between throw ratios and focus positions.

The projection device may further comprise an image capture apparatus.

The controlling the focus lens set to move to a target focus position (corresponding to the target throw ratio based on a preset focus mapping relationship between throw ratios and focus positions) may comprise at least one of or each of:
- determining an initial focus position corresponding to the target throw ratio based on the target throw ratio and the focus mapping relationship;
- determining, based on the initial focus position, a reference focus position for obtaining a projection image, wherein the projection image is obtained by the image capture apparatus; and
- controlling the focus lens set to move to the target focus position based on the ref-erence focus position.

The controlling the focus lens set to move to the target focus position based on the reference focus position may comprise at least one of or each of:
- driving the focus lens set to move from the reference focus position to a direction of the initial focus position through a focus drive mechanism associated with the focus lens set, and obtaining multiple frames of projection images at different positions;
- determining a position corresponding to a maximum clarity image from the multiple frames of projection images as the target focus position; and
- controlling the focus lens set to move to the target focus position.

The obtaining multiple frames of projection images at different positions may comprise at least one of or each of:
- obtaining a reference exposure value of the image capture apparatus under exposure compensation;
- configuring the reference exposure value as an exposure parameter of the image capture apparatus; and
- capturing the multiple frames of projection images through the image capture apparatus when the focus lens set moves to different positions.

Controlling the focus lens set to move to the target focus position may comprise at least one of or each of: determining a backup focus position based on the target focus position, wherein a spacing distance between the backup focus position and the target focus position satisfies a preset spacing distance; and driving the focus lens set to move from the backup focus position to a direction of the target focus position through the focus drive mechanism associated with the focus lens set, preferably until the focus lens set enters a position area corresponding to the target focus position.

The projection device may further comprise a distance measuring sensor.

The method may further comprise at least one of or each of:
- determining a light engine projection area on a projection plane based on the target throw ratio;
- determining, based on the light engine projection area, detection data corresponding to a security detection range from detection data of the distance measuring sensor, preferably wherein the security detection range comprises the light engine projection area; and
- performing a projection protection operation, preferably when the detection data within the security detection range reflects the presence of a detection target within the security detection range.

Determining a light engine projection area on a projection plane based on the target throw ratio may comprise:
- obtaining the detection data of the distance measuring sensor and determine a projectable area on the projection plane based on the detection data; and/or
- determining the light engine projection area on the projection plane based on the throw ratio and the projectable area.

Determining, based on the light engine projection area, detection data corresponding to a security detection range from detection data of the distance measuring sensor, may comprise:
- determining an area within a detection range of the distance measuring sensor that overlaps with a projection range corresponding to the light engine projection area as the security detection range; and/or
- removing detection data beyond the security detection range from the detection data of the distance measuring sensor, preferably to obtain the detection data within the security detection range.

Performing a projection protection operation may comprise at least one of or each of:
- obtaining a target distance between the detection target and the projection device;
- performing a first projection protection operation if the target distance is greater than or equal to a preset distance, wherein the first projection protection operation preferably comprises: adjusting the brightness of a light engine of the projection device to the lowest and outputting a prompt message in a projection image, wherein more preferably the prompt message is used to prompt the presence of a target within a valid projection range of the projection device; and
- performing a second projection protection operation if the target distance is less than the preset distance, wherein the second projection protection operation preferably comprises: adjusting the brightness of the light engine of the projection device to the lowest.

The projection lens may further comprise a focus detection assembly, wherein the focus detection assembly comprises a focus motion component and a focus detection component.

One of the focus motion component and the focus detection component may be connected to the focus lens set and may preferably follow the movement of the focus lens set for focusing. The other one of the focus motion component and the focus detection component may be fixed relative to the lens barrel. Preferably, the focus detection component may be configured to cooperate with the focus motion component to detect a movement distance of the focus lens set relative to the lens barrel.

The optical lens set may further comprise a fixed lens set fixed to the lens barrel. The focus lens set, the zoom lens set, and the fixed lens set may be arranged in sequence along the extension direction of the first optical axis.

One of the zoom motion component and the zoom detection component may be connected to the zoom lens set, and/or the other one of the zoom motion component and the zoom detection component may be connected to the fixed lens set, and/or the zoom detection component may be configured to cooperate with the zoom motion component to detect a distance between the zoom lens set and the fixed lens set.

One of the focus motion component and the focus detection component may be connected to the focus lens set, and/or the other one of the focus motion component and the focus detection component may be connected to the fixed lens set, and/or the focus detection component may be configured to cooperate with the focus motion component to detect a distance between the focus lens set and the fixed lens set.

The zoom motion component may comprise or be a first magnet and/or the zoom detection component may comprise or be a first sensor, and/or the first sensor may be configured to sense a magnetic signal of the first magnet to detect the movement distance of the zoom lens set relative to the lens barrel.

The focus detection component may comprise or be a second sensor, and/or the focus motion component may comprise or be a second magnet, and/or the second sensor may be configured to sense a magnetic signal of the second magnet to detect the movement distance of the focus lens set relative to the lens barrel.

The first magnet may be composed of multiple segments of magnetic blocks connected end to end.

A plurality of N poles and a plurality of S poles of the first magnet may be alternately arranged along the extension direction of the first optical axis.

### Brief Description of the Drawings

- FIG. 1: is an internal structural diagram of a projection device in an embodiment;
- FIG. 2: is a schematic flowchart of a control method for a projection device in an embodiment;
- FIG. 3: is a schematic flowchart of a step of controlling a zoom lens set to perform zoom motion in an embodiment;
- FIG. 4: is a schematic flowchart of a step of controlling a focus lens set to move to a target focus position corresponding to a target throw ratio in an embodiment;
- FIG. 5: is a schematic flowchart of a step of controlling the focus lens set to move to the target focus position based on a reference focus position in an embodiment;
- FIG. 6: is a schematic flowchart of a step of controlling the focus lens set to move to the target focus position in an embodiment;
- FIG. 7: is a schematic flowchart of a step of obtaining multiple frames of projection images at different positions in an embodiment;
- FIG. 8: is a schematic flowchart of a projection method in an embodiment;
- FIG. 9: is a schematic flowchart of a step of determining a light engine projection area of the projection device on a projection plane in an embodiment;
- FIG. 10: is a schematic diagram of a horizontal throw distance of a light engine in an embodiment;
- FIG. 11: is a schematic diagram of a vertical throw distance of the light engine in an embodiment;
- FIG. 12: is a schematic flowchart of a step of determining detection data corresponding to a security detection range in an embodiment;
- FIG. 13: is a schematic diagram of a step of controlling the projection device to perform a projection protection operation in an embodiment;
- FIG. 14: is a schematic structural diagram of a projection lens in a projection device in an embodiment;
- FIG. 15: is a schematic structural diagram of an optical lens set in an embodiment; and
- FIG. 16: is a structural block diagram of a control apparatus for a projection device in an embodiment.

### Detailed Description

In order to make the objectives, technical solutions, and advantages of the present invention clearer, the present invention will be further described in detail below in conjunction with the accompanying drawings and embodiments. It should be understood that the specific embodiments described herein are merely used to explain the present invention, but not to limit the present invention.

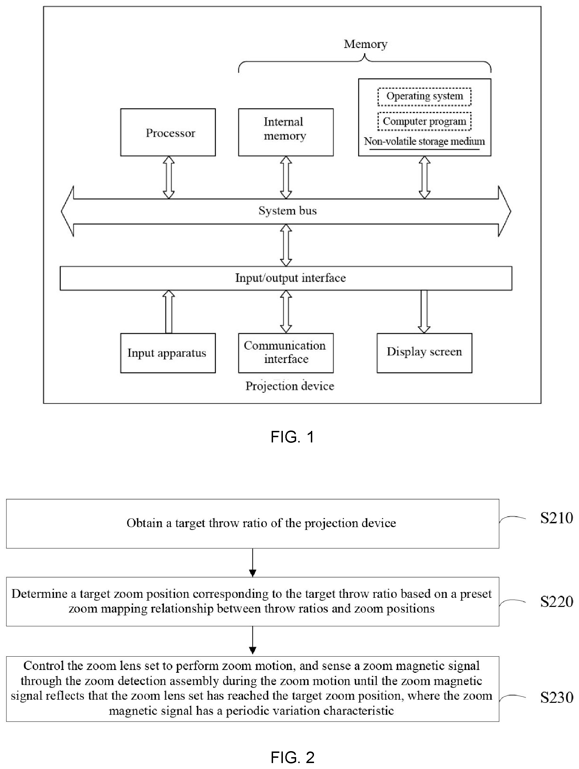

A control method for a projection device, provided by embodiments, can be applied to a projection device shown in FIG. 1. The projection device includes a processor, a memory, a communication interface, a display screen, and an input apparatus connected through a system bus. The processor of the projection device is configured to provide computing and control capabilities. The memory of the projection device includes a non-volatile storage medium and an internal memory. The non-volatile storage medium stores an operating system and a computer program. The internal memory provides an environment for running of the operating system and the computer program in the non-volatile storage medium. The communication interface of the projection device is configured for wired or wireless communication with an external terminal. The wireless communication may be implemented through WIFI, a mobile cellular network, an NFC (Near Field Communication), or other technologies. The computer program is executed by the processor to implement the control method for the projection device. The display screen of the projection device may be a liquid crystal display screen or an electronic ink display screen. The input apparatus of the projection device may be a touch layer covering the display screen, or a button, trackball or touchpad arranged on a housing of the projection device, or an external keyboard, touchpad or mouse.

A person skilled in the art may understand that the structure shown in FIG. 1 is merely a block diagram of a partial structure related to the solution of the present invention, and does not constitute a limitation on the computer device to which the solution of the present invention is applied. The specific computer device may include more or fewer parts than shown in the figure, or combine some parts, or have a different arrangement of parts.

In one embodiment, as shown in FIG. 2, a control method for a projection device is provided. The method is applied to the projection device of FIG. 1 as an example for explanation, and includes the following steps:
S210: Obtain a target throw ratio of the projection device.

The target throw ratio may be a throw ratio corresponding to the projection device that needs to be focused. The throw ratio (TR) may be a ratio of a projection image width to a throw distance, i.e., TR = throw distance/ projection image width. The throw ratio determines widths of different projection images projected by the projection device at the same throw distance.

Optionally, the projection device can obtain the target throw ratio by receiving an adjustment instruction sent by an external device or apparatus. For example, the adjustment instruction can be sent to the projection device through a terminal or remote controller connected to the projection device. The adjustment instruction may include the target throw ratio or projection image width. The target throw ratio can alternatively be adaptively determined by the projection device based on a projection scenario, that is, the projection device determines a corresponding projection image width based on the projection scenario, and determines the target throw ratio based on a maximum projection image width and a throw distance of the projection device.

For example, in a projection scenario where a curtain or a flat projection surface is smaller than a maximum throw ratio of the projection device, the projection device obtains the maximum projection image width through an image capture apparatus, so that a projection image can accurately cover the entire curtain or flat projection surface. At this point, the projection device can determine the target throw ratio based on the maximum projection image width and the throw distance of the projection device. Alternatively, when there are obstacles in the projection scenario, the projection device can obtain a projection surface that can be covered in the projection scenario through the image capture apparatus, and determine a projection image width of the projection surface, thereby determining the target throw ratio. Alternatively, when there is a complex space in the projection scenario that does not conform to maximum surface projection, but the projection device can find a projection surface within a throw ratio range, the projection device can obtain a projection width of the projection surface through the image capture apparatus and then determine the target throw ratio.

S220: Determine a target zoom position corresponding to the target throw ratio based on a preset zoom mapping relationship between throw ratios and zoom positions.

Optionally, the zoom mapping relationship may be used to represent a corresponding relationship between different throw ratios and zoom positions, and the zoom position may be a magnetic encoder position of a zoom lens set, where the magnetic encoder position is detected by a magnetic encoder.

Optionally, the zoom mapping relationship may be stored in the storage medium of the projection device. The zoom mapping relationship may store multiple sets of throw ratios and zoom positions corresponding to the throw ratios. The zoom mapping relationship may be stored in the form of a relational database table or in the form of key-value pairs. The embodiments of the present invention do not limit this. When the zoom mapping relationship is stored in the form of key-value pairs, the throw ratio is a key and the zoom position is a value. In other ways, the zoom mapping relationship may alternatively be a conversion formula between zoom positions and different throw ratios. Based on the target throw ratio and the conversion formula, a target magnetic encoder position corresponding to the target throw ratio can be obtained.

It can be understood that there is a one-to-one corresponding relationship between throw ratios and zoom positions in the zoom mapping relationship, that is, a corresponding zoom position can be determined from the zoom mapping relationship based on a throw ratio.

For example, the projection device can query the zoom mapping relationship based on the target throw ratio, to determine the target zoom position corresponding to the target throw ratio.

S230: Control a zoom lens set to perform zoom motion, and sense a zoom magnetic signal through a zoom detection assembly during the zoom motion until the zoom magnetic signal reflects that the zoom lens set has reached the target zoom position, where the zoom magnetic signal has a periodic variation characteristic.

Optionally, for controlling the zoom lens set to perform zoom motion, the zoom lens set can be driven to move by adjusting a zoom drive mechanism on the projection device until it is determined that the zoom lens set has reached the target zoom position corresponding to the target throw ratio.

For example, the zoom drive mechanism may be a zoom motor. The projection device can drive the zoom lens set to move by adjusting the number of steps of the zoom motor.

Optionally, the zoom detection assembly includes a zoom detection component and a zoom motion component, the zoom motion component is a first magnet, and the first magnet is composed of multiple segments of magnetic blocks connected along an optical axis of a projection lens. During the movement of the zoom lens set, the zoom detection component detects periodically varying zoom magnetic signals generated by the first magnet.

Optionally, the periodically varying zoom magnetic signals exhibit a sinusoidal periodic variation characteristic.

The zoom magnetic signal generated by the first magnet exhibits a sinusoidal periodic variation, and one magnetic block in the first magnet corresponds to a sinusoidal period in the zoom magnetic signal. Therefore, the first magnet composed of multiple segments of magnetic blocks can generate the zoom magnetic signal with the sinusoidal periodic variation, and each magnetic block has a corresponding coded value. During the movement of the zoom lens set, an accurate position of the zoom lens set can be obtained by combining a zoom magnetic signal value and the coded value of the magnetic block. The splicing of the magnetic blocks can implement a relatively long distance of movement zoom detection, achieving a large-scale throw ratio variation of a projection image.

For example, the focus detection assembly includes a tunnel magneto resistance (TMR) sensor. Correspondingly, the focus magnetic signal is a TMR value.

Optionally, during the movement of the zoom lens set, the projection device can sense the zoom magnetic signal through the zoom detection assembly periodically or in real time, and determine whether the zoom lens set has reached the target zoom position based on the zoom magnetic signal.

For example, the projection device can determine a current zoom position of the zoom lens set based on the sensed zoom magnetic signal, and then determine whether the zoom lens set has reached the target zoom position based on a position deviation between the current zoom position and the target zoom position. Alternatively, the projection device can determine whether the zoom lens set has reached the target zoom position based on a deviation between the zoom magnetic signal and a target zoom magnetic signal corresponding to the target zoom position.

In embodiments, the target throw ratio of the projection device is obtained, then the target zoom position corresponding to the target throw ratio is determined based on the preset zoom mapping relationship between throw ratios and zoom positions, the zoom lens set is controlled to perform zoom motion, and the zoom magnetic signal is sensed through the zoom detection assembly during the zoom motion until the zoom magnetic signal reflects that the zoom lens set has reached the target zoom position, where the zoom magnetic signal has the periodic variation characteristic. In the above method, by determining the corresponding target zoom position from the preset zoom mapping relationship based on the target throw ratio, the control efficiency of the projection device can be effectively improved. Moreover, by determining that the zoom lens set has reached the target zoom position based on the zoom magnetic signal, the control accuracy and zooming accuracy of the projection device can be improved.

The zoom mapping relationship can be constructed through the following steps:
S11: Obtain a calibration relationship between multiple throw ratios formed by the projection device at a reference throw distance and magnetic encoder data.

The reference throw distance may be a straight-line distance between a lens of the projection device and a projection image or projection surface when a magnetic encoder position table is constructed. The reference throw distance may be a fixed value within a range of 1 m to 4 m. For example, the reference throw distance may be 2 m.

Optionally, the projection device can project a projection image at the reference throw distance, obtain a width of the projection image through an image sensor, determine a throw ratio corresponding to the width of the projection image based on a ratio of the reference throw distance to the width of the projection image, and read magnetic encoder data corresponding to a current zoom magnetic encoder. Through the above method, a calibration relationship between a throw ratio and a corresponding magnetic encoder data can be determined. The above steps are repeated. The projection device determines multiple different throw ratios by adjusting the width of the projection image, and determines magnetic encoder data of the zoom magnetic encoder under each throw ratio, thereby obtaining the calibration relationship between multiple throw ratios and magnetic encoder data.

S12: Determine a magnetic encoder position corresponding to each throw ratio based on the calibration relationship between each throw ratio and magnetic encoder data.

For each throw ratio, the projection device can determine the magnetic encoder position based on the magnetic encoder data corresponding to the throw ratio in the calibration relationship.

S13: Construct the zoom mapping relationship based on each throw ratio and the magnetic encoder position corresponding to each throw ratio.

Optionally, after each throw ratio and the magnetic encoder position corresponding to each throw ratio are determined, the projection device can determine the zoom mapping relationship based on the corresponding relationship between the throw ratio and the magnetic encoder position.

For zooming control, in one embodiment, S220 of determining a target zoom position corresponding to the target throw ratio based on a preset zoom mapping relationship between throw ratios and zoom positions includes: determining a target zoom magnetic signal value of the target zoom position based on the zoom mapping relationship. S230 of controlling a zoom lens set to perform zoom motion, and sensing a zoom magnetic signal through a zoom detection assembly during the zoom motion until the zoom magnetic signal reflects that the zoom lens set has reached the target zoom position, includes: determining, based on a current zoom magnetic signal of the zoom lens set and periodic variation data of the zoom magnetic signal, that the zoom lens set has reached the target zoom position when the zoom magnetic signal reaches the target zoom magnetic signal value.

Optionally, the projection device can read the preset zoom mapping relationship between throw ratios and zoom positions to determine a zoom position corresponding to the target throw ratio, as the desired target zoom position reached by the zoom lens set.

Optionally, different positions of the zoom lens set correspond to different zoom magnetic signals. The projection device can obtain a signal value mapping relationship between a preset zoom position and a zoom magnetic signal, and determine the target zoom magnetic signal value corresponding to the target zoom position based on the signal value mapping relationship.

The signal value mapping relationship may be used to represent a corresponding relationship between different zoom positions and zoom magnetic signals.

For example, the projection device can read a preset signal value mapping relationship to determine a zoom magnetic signal corresponding to the target zoom position, as the desired target zoom magnetic signal value detected by the zoom detection assembly.

Optionally, when a magnetic signal deviation between the zoom magnetic signal and the target zoom magnetic signal value is less than a preset detection deviation, it can be determined that the zoom lens set has reached the target zoom position.

In embodiments, the target zoom magnetic signal value of the target zoom position is determined based on the zoom mapping relationship, and then based on the current zoom magnetic signal of the zoom lens set and the periodic variation data of the zoom magnetic signal, it is determined that the zoom lens set has reached the target zoom position when the zoom magnetic signal reaches the target zoom magnetic signal value. In the above method, a position of the zoom detection assembly is directly correlated with a position of the zoom lens set, to accurately reflect the position of the zoom lens set. Therefore, whether the zoom lens set enters the target zoom position is determined through the zoom magnetic signal of the zoom detection assembly and the target zoom magnetic signal value (of the zoom magnetic signal when the zoom lens set correspondingly reaches the target zoom position), thereby improving zooming control accuracy.

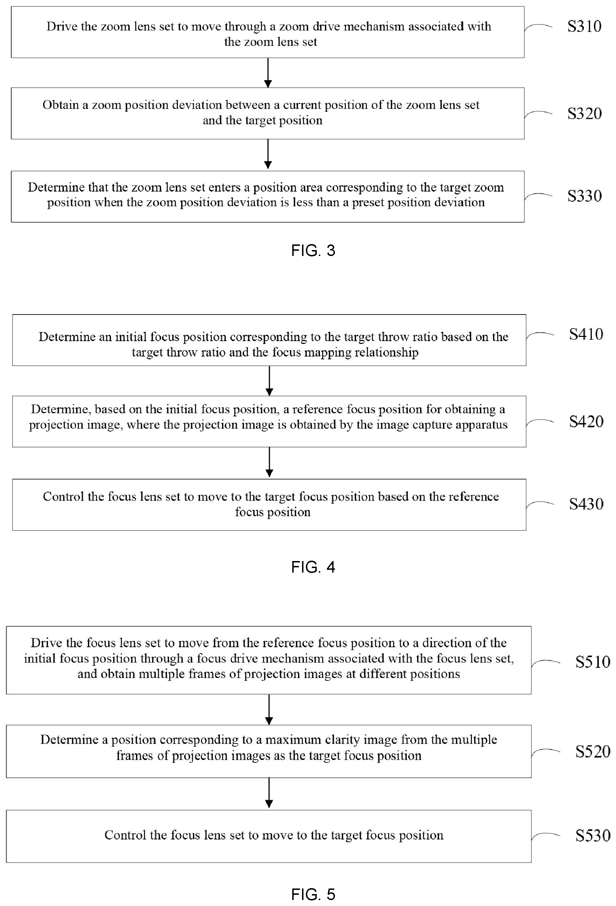

For zooming control, in one embodiment, as shown in FIG. 3, S230 of controlling a zoom lens set to perform zoom motion until the zoom magnetic signal reflects that the zoom lens set has reached the target zoom position includes:
S310: Drive the zoom lens set to move through a zoom drive mechanism associated with the zoom lens set.

Optionally, the projection device can control the zoom drive mechanism associated with the zoom lens set to drive the zoom lens set to move, and detect the position of the zoom lens set.

For example, the zoom drive mechanism associated with the zoom lens set may be a zoom motor, and the projection device may drive the zoom lens set to move by adjusting the number of steps of the zoom motor.

S320: Obtain a zoom position deviation between a current position of the zoom lens set and the target zoom position.

The zoom detection assembly includes a TMR and a magnet segment group, and the position of the zoom detection assembly is used to represent a position of the TMR on the magnet segment group.

Optionally, the projection device can obtain a current position of the zoom detection assembly and obtain a zoom position deviation between the current position and the target zoom position.

For example, the projection device can obtain a position of the TMR on the magnet segment group in the focus detection assembly in real time or periodically, and designate the position obtained each time as the current position.

S330: Determine that the zoom lens set enters a position area corresponding to the target zoom position when the zoom position deviation is less than a preset position deviation.

Optionally, after obtaining the zoom position deviation, the projection device can compare the zoom position deviation with the preset position deviation, and determine that a focus lens set enters the position area corresponding to the target zoom position when the position deviation is less than the preset position deviation.

In an optional embodiment, when the position deviation is greater than or equal to the preset position deviation, the projection device can continue to drive the zoom lens set to move through the zoom drive mechanism, so as to obtain a zoom position deviation based on a new current position until the zoom position deviation is less than the preset position deviation.

In embodiments, the zoom lens set is driven to move through the zoom drive mechanism associated with the zoom lens set, the zoom position deviation between the current position of the zoom detection assembly and the target zoom position is obtained, and when the zoom position deviation is less than the preset position deviation, it is determined that the zoom lens set enters the position area corresponding to the target zoom position. In the above method, the position of the zoom detection assembly is directly correlated with the position of the zoom lens set, to accurately reflect the position of the zoom lens set. Therefore, whether the zoom lens set enters the position area corresponding to the target zoom position is determined through the current position of the zoom detection assembly and the target position (the target zoom position that the zoom lens set correspondingly reaches), thereby improving zooming control accuracy.

For focusing control, in one embodiment, the control method for the projection device further includes: controlling the focus lens set to move to a target focus position corresponding to the target throw ratio based on a preset focus mapping relationship between throw ratios and focus positions.

Optionally, the focus mapping relationship can be used to represent a corresponding relationship between different throw distances, different throw ratios, and the focus position, where the focus position may be an object distance.

Optionally, a current throw distance of the projection device is obtained, and the focus mapping relationship is queried based on the target throw ratio and the current throw distance to determine the target focus position corresponding to the target throw ratio.

Optionally, for controlling the focus lens set to move to the target focus position corresponding to the target throw ratio, the focus lens set can be driven to move by adjusting a focus drive mechanism on the projection device until it is determined that the focus lens set has moved to the target focus position.

For example, the focus drive mechanism may be a focus motor. The projection device can drive the focus lens set to move by adjusting the number of steps of the focus motor.

For example, the focus position can be determined based on the number of steps of the focus motor or the magnetic encoder data of the focus magnetic encoder.

In embodiments, the focus lens set is controlled to move to the target focus position corresponding to the target throw ratio based on the preset focus mapping relationship between throw ratios and focus positions. In the above method, the target focus position is determined by the target throw ratio and the preset focus mapping relationship, without relying on manual focusing or specific projection images. Instead, the target focus position is determined by querying the preset focus mapping relationship, whereby the control efficiency of the projection device can be effectively improved.

The focus mapping relationship can be constructed in various ways. In one embodiment, the focus mapping relationship can be simulated based on an optical simulation model of the projection device, including the following steps:
S21: Input simulation parameter conditions of the projection device into an optical simulation model of the projection device for imaging simulation, to obtain a corresponding relationship between throw ratios and target object distances of the projection device at different throw distances, where the target object distance represents an object distance of the projection device, at which a projection image meets quality requirements.

Optionally, the simulation parameter conditions of the projection device include a throw ratio, an object distance, and a throw distance. Different throw ratios, object distances, and throw distances are input into the optical simulation model, imaging simulation is performed through a preset simulation method, and imaging qualities of projection images under different throw ratios, object distances, and throw distances are determined through a contrast detection algorithm.

For example, the optical simulation model may accurately describe parameters such as curvature, thickness, material, and lens spacing of each lens in the projection device, and the preset simulation method may include ray tracing and the like. The imaging quality may be clarity of the projection image, and "a projection image meets quality requirements" may be that the clarity of the projection image meets preset requirements. The contrast detection algorithm may include a gradient-based algorithm, a histogram-based algorithm, or a wavelet-based algorithm. The imaging quality of the projection image may alternatively be adjusted through a transfer function. The present disclosure does not limit this.

Optionally, different throw distances can be obtained, and after one throw distance is obtained, the throw ratio and the object distance are continuously adjusted to determine target object distances corresponding to different throw ratios at the throw distance based on the imaging quality.

S22: Construct a corresponding relationship between a throw ratio and a number of steps of a focus motor or magnetic encoder data at different throw distances as the focus mapping relationship based on the corresponding relationship between an object distance of the projection device and the number of steps of the focus motor or the magnetic encoder data, as well as the corresponding relationship between throw ratios and target object distances at different throw distances.

Optionally, the corresponding relationship between the object distance of the projection device and the number of steps of the focus motor or between the object distance of the projection device and the magnetic encoder data can be determined through a pre-built mathematical model or mapping table. After the object distance of the projection device is determined, a corresponding number of steps of the focus motor or a corresponding magnetic encoder data can be determined based on the mathematical model or mapping table.

Optionally, at different throw distances, by combining the one-to-one corresponding relationship between throw ratios and target object distances and the one-to-one corresponding relationship between the object distance of the projection device and the number of steps of the focus motor or the one-to-one corresponding relationship between the object distance of the projection device and the magnetic encoder data, with the target object distance as an intermediate bridge, the corresponding relationship between the throw ratio and the number of steps of the focus motor or between the throw ratio and the magnetic encoder data can be determined at different throw distances, thereby determining the focus mapping relationship.

For example, the focus mapping relationship may include corresponding relationships between different throw ratios and focus positions at different throw distances, each focus position corresponds to a group of parameters, and the parameters include at least one of a target object distance, the number of steps of the focus motor, and magnetic encoder data.

The focus mapping relationship can alternatively be obtained based on factory calibration, including the following steps:
S31: Obtain, at each of multiple throw distances, an image quality curve of projection image quality varying within a range of the focus motor in the projection device under different throw ratios.

Optionally, for each throw distance, a throw ratio of the projection device is obtained first, and then the focus motor is adjusted to rotate. Each time the focus motor rotates, a projection image quality corresponding to a current number of steps of the focus motor is obtained. By continuously adjusting the steps of the focus motor, the image quality curve of projection image quality varying within the range of the focus motor under the current throw ratio can be obtained.

For example, when the throw distance is 2 meters and the throw ratio is 0.9, the focus motor is adjusted step by step from a leftmost end to a rightmost end of a structure, or from a rightmost end to a leftmost end of a structure, to obtain an image quality curve of projection image quality varying within the range of the focus motor.

Optionally, the throw ratio of the projection device is adjusted at one throw distance, and then the above steps are repeated to obtain a curve of multiple image qualities at a fixed throw distance and different throw ratios. For example, there are m throw distances and n throw ratios. Then, an m × n image quality curve can be obtained, where the horizontal axis of the image quality curve can represent the number of steps of the focus motor, and the vertical axis can represent the clarity of the projection image.

S32: Determine, based on the image quality curve, a number of steps of the focus motor that meets quality requirements.

Optionally, a peak point in the image quality curve can be first determined, and a horizontal axis position corresponding to the peak point can be the number of steps of the focus motor that meets quality requirements. For example, values in the image quality curve can be compared to determine a maximum value point, and the number of steps of the focus motor that meets quality requirements is determined based on a horizontal axis position corresponding to the maximum value point. Alternatively, when there are multiple local peaks in the image quality curve, the magnitudes of the peaks are compared, and the number of steps of the focus motor that meets quality requirements is determined based on a horizontal axis position corresponding to a maximum peak.

S33: Construct the focus mapping relationship based on the number of steps of the focus motor based on the number of steps of the focus motor corresponding to each throw distance and throw ratio.

Optionally, for each image quality curve, a group of throw distances, throw ratios, and steps of the focus motor that meet quality requirements, corresponding to the image quality curve, can be determined, and the focus mapping relationship can be determined based on multiple groups of throw distances, throw ratios, and steps of the focus motor.

Optionally, after a group of throw distances, throw ratios, and steps of the focus motor is determined, a corresponding object distance can be further determined based on the relationship between the number of steps of the focus motor and the object distance.

In another optional embodiment, there is a correlation between the steps of the focus motor and the magnetic encoder data. Therefore, for each throw distance, the image quality curve of projection image quality varying within the range of the focus motor under different throw ratios can be obtained. At this point, the horizontal axis of the image quality curve represents the magnetic encoder data, and the vertical axis represents the clarity of the projection image. By the same steps as S32 and S33, multiple groups of throw distances, throw ratios, and magnetic encoder data can be determined, and then the focus mapping relationship can be determined based on multiple groups of throw distances, throw ratios, and magnetic encoder data.

The projection device further includes an image capture apparatus. In one embodiment, as shown in FIG. 4, the controlling the focus lens set to move to a target focus position corresponding to the target throw ratio based on a preset focus mapping relationship between throw ratios and focus positions includes:
S410: Determine an initial focus position corresponding to the target throw ratio based on the target throw ratio and the focus mapping relationship.

The focus position corresponding to the target throw ratio in the focus mapping relationship is the initial focus position.

Optionally, the projection device can read the preset focus mapping relationship between throw ratios and focus positions to determine the initial focus position corresponding to the target throw ratio.

S420: Determine, based on the initial focus position, a reference focus position for obtaining a projection image, where the projection image is obtained by the image capture apparatus.

The focus position can be determined through magnetic encoder data, and the magnetic encoder data of the reference focus position is greater than the magnetic encoder data of the initial focus position.

Optionally, after determining the initial focus position, the projection device can determine the reference focus position based on the initial focus position and a preset spacing distance. After the focus lens set has moved to the reference focus position, the projection device starts to obtain a projection image. It can be understood that, after determining that the focus lens set has moved to the reference focus position, the projection device can control the movement of the focus lens set while obtaining projection images of the focus lens set at different positions.

For example, when the projection device moves the focus lens set to the reference focus position, a data deviation between current focus detection data of the focus detection assembly and candidate detection data of the reference focus position can be obtained, and it can be determined that the projection device is located at the reference focus position when the data deviation is less than a preset detection deviation.

For example, the preset spacing can be determined based on a depth of focus. In embodiments, twice the depth of focus motor travel is designated as the preset spacing. The reference focus position can be determined based on the initial focus position and twice the depth of focus motor travel.

Optionally, the depth of focus can be preset in the storage medium of the projection device, and determined through theoretical calculations based on basic parameters of a projection lens in the projection device and optical formulas, or determined through experimental measurements. The embodiments of the present invention do not limit the method for determining the depth of focus.

For example, the image capture apparatus may be a charge-coupled device (CCD) image sensor, a complementary metal-oxide-semiconductor (CMOS) image sensor, a digital micromirror device (DMD), or the like.

S430: Control the focus lens set to move to the target focus position based on the reference focus position.

The target focus position may be a position where a maximum clarity of the projection image is obtained during the movement of the focus lens set from the reference focus position.

In an optional embodiment, after determining the target focus position, the projection device can control the focus lens set to move based on the current position of the focus lens set until the position deviation between the position of the focus lens set and the target focus position is less than the preset deviation.

In embodiments, the initial focus position corresponding to the target throw ratio is determined based on the target throw ratio and the focus mapping relationship, the reference focus position for starting to obtain projection images is determined based on the initial focus position, the projection image is obtained by the image capture apparatus, and the focus lens set is controlled to move to the target focus position based on the reference focus position. In the above method, the reference focus position can be determined based on the initial focus position, and then the projection images can be continuously obtained from the reference focus position, whereby the target focus position can be determined based on the clarities of the obtained multiple groups of projection images, thereby improving the accuracy of focusing control.

The target focus position is a position corresponding to obtaining an image with maximum clarity. Therefore, in one embodiment, as shown in FIG. 5, S430 of controlling the focus lens set to move to the target focus position based on the reference focus position includes:
S510: Drive the focus lens set to move from the reference focus position to a direction of the initial focus position through a focus drive mechanism associated with the focus lens set, and obtain multiple frames of projection images at different positions.

For example, the focus drive mechanism associated with the focus lens set may be a focus motor. The projection device can drive the focus lens set to move by adjusting the number of steps of the focus motor.

It can be understood that, since the magnetic encoder data of the reference focus position is greater than the magnetic encoder data of the initial focus position, when the focus motor moves from the reference focus position to the direction of the initial focus position, the movement direction of the focus motor is opposite to the previous movement direction. When moving in the reverse direction, due to structural clearance errors, part of the travel of the focus motor does not actually drive a lens barrel to move, referred to as an idle travel phenomenon. During the idle travel, the position of the focus lens set does not change when the focus motor moves.

Optionally, the projection device can adjust the number of steps of the focus motor and capture a projection image when the number of steps of the focus motor changes.

For example, the projection device can obtain a frame of projection image after the focus motor moves a preset number of steps in a current movement direction, for example, the preset number of steps may be 8. In this way, when the focus lens set moves from the reference focus position to the direction of the initial focus position, multiple frames of projection images from different positions can be obtained.

S520: Determine a position corresponding to a maximum clarity image from the multiple frames of projection images as the target focus position.

Optionally, the projection device can, each time a frame of projection image is captured, determine a clarity of the projection image based on a preset image clarity detection algorithm, and then record the clarity of the projection image and a position where the projection image is obtained.

For example, the preset image clarity detection algorithm may include a gradient-based algorithm, a histogram-based algorithm, a wavelet transform-based algorithm, or the like. The imaging quality of the projection image can alternatively be adjusted through a transfer function. The present disclosure does not limit this.

In an optional embodiment, the projection device can control the focus lens set to move from the reference focus position to the initial focus position, and determine the maximum clarity image from the multiple frames of projection images obtained during the movement.

Optionally, an image quality curve of varying projection image quality during the movement of the focus motor is determined based on the multiple frames of projection images, a peak point (maximum clarity) in the image quality curve is determined, and a horizontal axis position corresponding to the peak point is determined as the target focus position.

For example, values in the image quality curve can be compared to determine a maximum value point, and the target focus position can be determined based on a horizontal axis position corresponding to the maximum value point.

In another optional embodiment, the projection device can control the focus lens set to move from the reference focus position to the direction of the initial focus position, compare the clarity of the current projection image with the clarities of other recorded projection images each time a frame of projection image is captured, and determine the target focus position based on variations in clarity. After determining the target focus position, the projection device does not need to control the focus lens set to move towards the direction of the initial focus position anymore.

For example, during the movement of the focus lens set, if the clarities of multiple consecutive frames of projection images obtained after a projection image are less than the clarity of the projection image, the projection image is determined as a target projection image, and a position corresponding to the target projection image is designated as the target focus position.

S530: Control the focus lens set to move to the target focus position.

Optionally, the projection device can control the focus motor to drive the focus lens set to move, and detect a position of the focus lens set to determine a position relationship between the position of the focus lens set and the target focus position until the focus lens set moves to the target focus position.

In an optional embodiment, the focus lens set can obtain a current position of the focus lens set, and determine a focus movement direction of the zoom lens set based on the current position and the target focus position.

For example, the projection device determines the target focus position based on the obtained multiple frames of projection images. That is, when the projection device determines the target focus position, the focus lens set has passed and left the target focus position, and the focus movement direction of the focus lens set is opposite to the current movement direction.

Optionally, after obtaining the focus movement direction, the projection device can control a focus drive motor to move towards a focus movement direction, so as to drive the focus lens set to the target focus position under the movement of the focus motor.

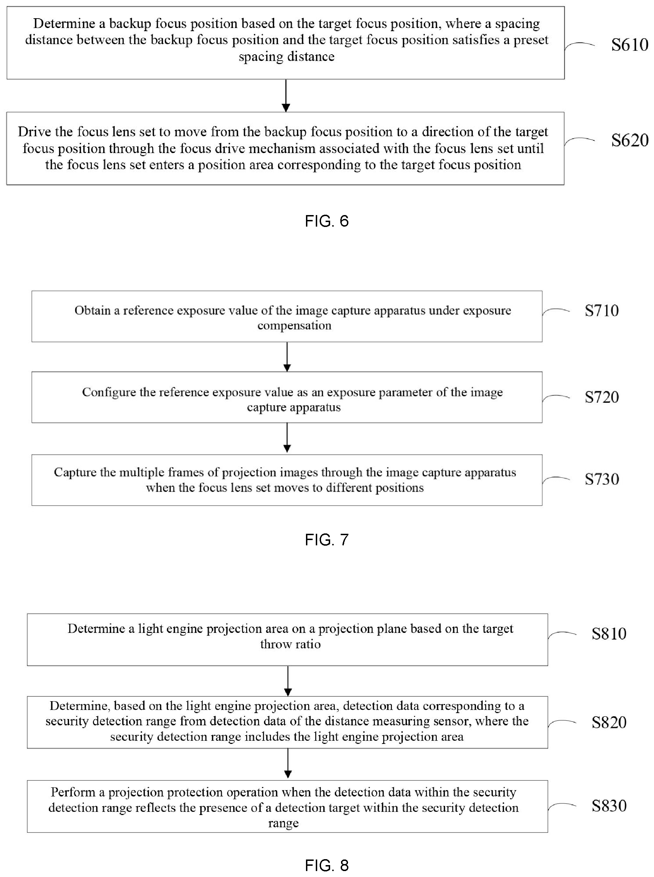

In another optional embodiment, as shown in FIG. 6, S530 of controlling the focus lens set to move to the target focus position includes:
S610: Determine a backup focus position based on the target focus position, where a spacing distance between the backup focus position and the target focus position satisfies a preset spacing distance.

The magnetic encoder data of the backup focus position is greater than the magnetic encoder data of the target focus position.

Optionally, after determining the target focus position, the projection device can determine the backup focus position based on the target focus position and the preset spacing distance, and control the focus lens set to move to the backup focus position.

For example, the preset spacing can be determined based on a depth of focus. In embodiments, twice the depth of focus motor travel is designated as the preset spacing. The reference focus position can be determined based on the initial focus position and twice the depth of focus motor travel.

S620: Drive the focus lens set to move from the backup focus position to a direction of the target focus position through the focus drive mechanism associated with the focus lens set until the focus lens set enters a position area corresponding to the target focus position.

The position area corresponding to the target focus position is a position range including the target focus position.

For example, the focus drive mechanism associated with the focus lens set may be a focus motor. The projection device can drive the focus lens set to move by adjusting the number of steps of the focus motor.

Optionally, for driving the focus lens set to move from the backup focus position to the direction of the target focus position through the focus drive mechanism associated with the focus lens set, a focus movement direction of the focus drive mechanism is determined based on the backup focus position and the target focus position, and then the focus drive mechanism is controlled to move towards the focus movement direction and drive the focus lens set to move towards the position area corresponding to the target focus position.

Optionally, the projection device can determine, based on the backup focus position of the focus lens set, whether the target focus position is located on a side of the backup focus position near a movement starting point of the focus lens set, or on a side near a movement end point of the focus lens set, thereby determining a movement direction of the focus drive mechanism as the focus movement direction.

For example, when the target focus position is located on the side of the backup focus position near the movement starting point, the projection device can determine that the focus movement direction is a positive movement direction, such as a clockwise movement direction of the focus motor; and when the target focus position is located on the side of the backup focus position near the movement end point, the projection device can determine that the focus movement direction is a negative movement direction, such as a counterclockwise movement direction of the focus motor.

Optionally, after obtaining the focus movement direction, the projection device can control the focus drive mechanism to move towards the focus movement direction, so as to drive the focus lens set to move towards the position area corresponding to the target focus position under the movement of the focus drive mechanism.

When the projection device determines the target focus position, the focus lens set has passed and left the target focus position, and the focus movement direction of the focus lens set is opposite to the current movement direction. If the focus lens set is directly controlled to move towards the opposite direction to the target focus position, the idle travel phenomenon of the focus motor may affect the effectiveness of focus control. Therefore, the focus lens set can be moved from the current position to the more distant backup focus position, and then start moving towards the target focus position from the backup focus position. Due to the long distance between the backup focus position and the target focus position, the focus motor eliminates the idle travel during movement and can accurately reach the target focus position.

In embodiments, the focus lens set is driven to move from the reference focus position to the direction of the initial focus position through the focus drive mechanism associated with the focus lens set, the multiple frames of projection images are obtained at different positions, the position corresponding to the maximum clarity image is determined from the multiple frames of projection images as the target focus position, and the focus lens set is controlled to move to the target focus position. In the above method, the projection device controls the focus lens set to move from the reference focus position to the direction of the initial focus position, and determines the target focus position based on the clarities of the projection images, whereby the position of the focus lens set at the maximum clarity of the projection images can be obtained, so the obtained target focus position is more accurate, and the accuracy of focus control is improved.

The clarity of the projection image is affected by an exposure parameter of the image capture apparatus. Therefore, in one embodiment, as shown in FIG. 7, S510 of obtaining multiple frames of projection images at different positions includes:
S710: Obtain a reference exposure value of the image capture apparatus under exposure compensation.

The exposure value is a data used to measure an exposure level of the image capture apparatus. The reference exposure value can be used as a standard exposure value, so that the image capture apparatus obtains the multiple frames of projection images at this reference exposure value.

In an optional embodiment, the reference exposure value can be a numerical value pre-stored in the storage medium of the projection device based on empirical values, and the reference exposure value is obtained by querying the storage medium.

In another optional embodiment, before obtaining a projection image, the image capture apparatus captures multiple frames of initial projection images, so that the image capture apparatus automatically adjusts its exposure value based on ambient brightness, and uses the adjusted exposure value as the reference exposure value.

S720: Configure the reference exposure value as an exposure parameter of the image capture apparatus.

Optionally, the projection device configures the image capture apparatus based on the obtained reference exposure value, to set the exposure parameter of the image capture apparatus as the reference exposure value.

For example, the projection device can send a configuration instruction to the image capture apparatus, where the configuration instruction includes the reference exposure value, and the configuration instruction is used to instruct the exposure parameter to be configured as the reference exposure value. Alternatively, the projection device can call a configuration interface of the image capture apparatus, interact with the image capture apparatus through the configuration interface, and configure the exposure parameter. The embodiments of the present invention do not limit the configuration process.

S730: Capture the multiple frames of projection images through the image capture apparatus when the focus lens set moves to different positions.

Optionally, when the focus lens set moves to different positions, the projection device captures a projection image corresponding to each position through the image capture apparatus.

For example, the projection device issues an image capture instruction to the image capture apparatus, and issues an image upload instruction to the image capture apparatus when the image capture apparatus captures projection images, thereby capturing the multiple frames of projection images of the focus lens set at different positions through the image capture apparatus.

In embodiments, the reference exposure value of the image capture apparatus under exposure compensation is obtained, then the reference exposure value is configured as the exposure parameter of the image capture apparatus, and the multiple frames of projection images are captured through the image capture apparatus when the focus lens set moves to different positions. In the above method, the multiple frames of projection images obtained by the projection device are captured by the image capture apparatus under the same reference exposure value, thereby avoiding luminance difference interference, making the comparison of the multiple frames of projection images more effective, enabling accurate determination of the maximum clarity image from the multiple frames of projection images, and further improving the accuracy of focus control.

For projection control, the projection device further includes a distance measuring sensor. In one embodiment, as shown in FIG. 8, the control method for the projection device further includes:
S810: Determine a light engine projection area on a projection plane based on the target throw ratio.

The projection plane refers to a plane used for projecting projection images. For example, the projection plane may be an ordinary wall, a glass curtain wall, a projection curtain, etc. The light engine projection area refers to an area where light energy output by a light engine of the projection device is mapped onto the projection plane.

Optionally, the projection device can calculate, based on a throw ratio and a throw distance, a horizontal throw distance or a vertical throw distance of the light engine, or a horizontal throw distance and a vertical throw distance of the light engine, and use an area formed by the horizontal throw distance, the vertical throw distance, or both the horizontal throw distance and the vertical throw distance as the light engine projection area.

S820: Determine, based on the light engine projection area, detection data corresponding to a security detection range from detection data of the distance measuring sensor, where the security detection range includes the light engine projection area.

Optionally, a detection range corresponding to the detection data of the distance measuring sensor is greater than or equal to the security detection range. Then, the projection device can determine the detection range of the distance measuring sensor based on the detection data of the distance measuring sensor. Generally, security issues in the projection process are induced by strong light emitted by the light engine. Therefore, the projection device can obtain a portion of the detection range that overlaps with a projection range corresponding to the light engine projection area, and use the overlap portion as the security detection range. Based on the security detection range, data beyond the security detection range is removed from the detection data of the distance measuring sensor to obtain the detection data within the security detection range.

Alternatively, the projection device can input the light engine projection area and the detection data of the distance measuring sensor into a preset neural network model, and the neural network model analyzes the light engine projection area and the detection data to determine the detection data within the security detection range.

S830: Perform a projection protection operation when the detection data within the security detection range reflects the presence of a detection target within the security detection range.

The projection protection operation may be an operation of quickly reducing the intensity of light output by the light engine of the projection device, or immediately adjusting a projection angle of the projection device to avoid the position of a person or object in a projection image, or outputting a prompt message to a target (person) or operator to prompt the target or operator to stay away from the security detection range in a timely manner.

In embodiments, when the presence of the detection target within the security detection range is determined, the projection device can reduce the intensity of light output by the light engine of the projection device or adjust the projection angle, while outputting the prompt message.

Optionally, the projection device can further determine whether the distance between the detection target and the projection device is too close. If the distance is too close, the situation is considered urgent, and the projection device can reduce the intensity of light output by the light engine of the projection device or adjust the projection angle and not output a prompt message. If the distance is moderate or relatively far, the situation is considered more urgent, and the projection device can reduce the intensity of light output by the light engine of the projection device or adjust the projection angle and output a prompt message.

In the process of performing the projection protection operation, the projection device can monitor in real time or at preset intervals multiple throw distances collected by the distance measuring sensor, and continuously perceive, based on difference information between adjacent throw distances among the multiple throw distances, whether there is a detection target within the security detection range. For example, the preset intervals may be 300 milliseconds. If there is no target within the security detection range after a period of time, the brightness of the light engine of the projection device is restored to original brightness, and the prompt message in the projection image is cancelled.

It can be understood that the projection device can be alternatively configured with a hardware interrupt, and a user can enable or disable the hardware interrupt. When the user enables the hardware interrupt, the projection device can monitor in real time whether there is a target within the security detection range. When the user disables the hardware interrupt, the projection device cannot monitor whether there is a target within the security detection range.

In embodiments, the light engine projection area on the projection plane is determined based on the throw ratio of the projection device; the detection data corresponding to the security detection range is determined from the detection data of the distance measuring sensor based on the light engine projection area, where the security detection range includes the light engine projection area; and the projection protection operation is performed when the detection data within the security detection range reflects the presence of the detection target within the security detection range. In the above method, the light engine projection area is determined through the throw ratio, and then the data corresponding to the security detection range is filtered from the detection data of the distance measuring sensor based on the light engine projection area. Therefore, the method avoids recognizing non-overlap areas between the detection range and the light engine projection area in the target detection process, can monitor the security detection range in the projection process, and can timely detect and handle security issues that occur in the projection process. Meanwhile, the method reduces the processing of mass irrelevant data, decreases data processing volume, and improves data processing efficiency.

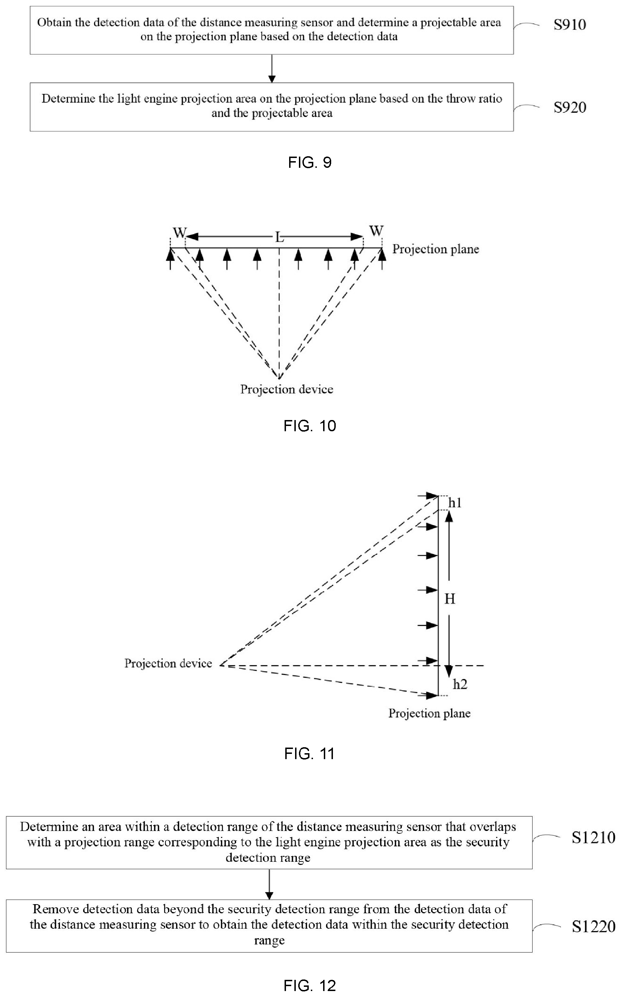

The light engine projection area of the projection device on the projection plane is determined based on a projectable area of the projection device. Therefore, in one embodiment, as shown in FIG. 9, S810 of determining a light engine projection area on a projection plane based on the target throw ratio includes:
S910: Obtain the detection data of the distance measuring sensor and determine a projectable area on the projection plane based on the detection data.

The projectable area refers to an area that can be detected by the distance measuring sensor on the projection plane and can be projected, and this area does not include obstacles.

In embodiments, when the distance measuring sensor emits ultrasonic signals to a surrounding space at a fixed frequency and receives detection data, the projection device can filter and remove adjacent detection data with significant differences from the detection data, determine a maximum rectangular area based on the remaining detection data, and designate the maximum rectangular area as the projectable area of the projection device.

S920: Determine the light engine projection area on the projection plane based on the throw ratio and the projectable area.

In embodiments, after the projectable area is obtained, the light engine of the projection device emits light energy into the projectable area to form a projection image in the projectable area. Due to the different throw ratios of the projection device, the proportion and position of the projection image in the projectable area vary. Then, the projection device can calculate the light engine projection area on the projection plane based on the throw ratio, that is, the area that forms the projection image.

Assuming that the projectable area includes a horizontal distance and a vertical distance, in one embodiment, the specific content of determining the light engine projection area on the projection plane based on the throw ratio and the projectable area includes the following steps:
Step 1: Determine a horizontal throw distance of the light engine of the projection device based on the throw ratio and the horizontal distance; and/or determine a vertical throw distance of the light engine of the projection device based on the throw ratio and the vertical distance of the projection device.

In embodiments, for the horizontal throw distance of the light engine, the projection device can determine a valid boundary in a horizontal direction based on the throw ratio, remove throw distances beyond the valid boundary in the horizontal direction from horizontal lengths of multiple throw distances to obtain a valid length in the horizontal direction, and designate the throw distance within the valid length in the horizontal direction as a horizontal valid throw distance.

For a vertical valid throw distance, the projection device can determine a valid boundary in a vertical direction based on the throw ratio of the projection device, remove throw distances beyond the valid boundary in the vertical direction from vertical heights of multiple throw distances to obtain a valid height in the vertical direction, and designate the throw distance within the valid height in the vertical direction as a vertical throw distance of the light engine.

FIG. 10 is a schematic diagram of a horizontal throw distance of a light engine. Assuming that a plurality of distance measuring sensors are arranged at angles of 45° in the horizontal direction and form an 8×8 dot matrix, when the throw ratio is 0.9, all throw distances are valid throw distances. When the throw ratio is 1.5, the throw distance is calculated based on L/2 = d × tan22.5. Then an invalid throw distance is cropped based on an area occupied by the distance measuring sensor corresponding to L/2. In the figure, the distance L and the distances W on both sides form a horizontal distance, where W represents other distances in the horizontal distance except for the horizontal throw distance of the light engine, and the distance L represents the horizontal throw distance of the light engine.

FIG. 11 is a schematic diagram of a vertical throw distance of the light engine, where heights H, h1, and h2 represent vertical distances, H represents the vertical throw distance of the light engine, and h1 and h2 represent other distances in the vertical distances except for the vertical throw distance of the light engine.

Step 2: Designate an area formed by the horizontal throw distance and/or vertical throw distance of the light engine as the light engine projection area.

Optionally, after the horizontal throw distance and vertical throw distance of the light engine are obtained, the processor can determine a rectangular area formed based on the horizontal throw distance and vertical throw distance of the light engine, and designate the formed rectangular area as the light engine projection area.

In the above process, the horizontal throw distance of the light engine of the projection device is determined based on the throw ratio and the horizontal distance; and/or the vertical throw distance of the light engine of the projection device is determined based on the throw ratio and the vertical distance; and the area formed by the horizontal throw distance and/or vertical throw distance of the light engine is designated as the light engine projection area. By combining the throw ratio with the horizontal distance and vertical distance, this method can accurately calculate the horizontal throw distance and vertical throw distance of the light engine, thereby accurately finding the light engine projection area in the projection plane.

In embodiments, the detection data of the distance measuring sensor is obtained, the projectable area is determined on the projection plane based on the detection data, and the light engine projection area on the projection plane is determined based on the throw ratio and the projectable area. In the above method, the projectable area is determined by obtaining the detection data of the distance measuring sensor, and combined with the throw ratio to determine the light engine projection area, so that the projection image can accurately avoid obstacles and be fully displayed on the projection plane.

After the light engine projection area is obtained, detection data within the security detection range needs to be determined. Therefore, in one embodiment, as shown in FIG. 12, S820 of determining, based on the light engine projection area, detection data corresponding to a security detection range from detection data of the distance measuring sensor includes:
S1210: Determine an area within a detection range of the distance measuring sensor that overlaps with a projection range corresponding to the light engine projection area as the security detection range.

The security detection range refers to a range that the light energy of the light engine can radiate, and the detection range includes the security detection range and a non-security detection range. The security detection range is similar to the shape of a rectangular pyramid, where the vertex of the pyramid represents the position of the light engine of the projection device, and four corners of the pyramid represent four vertices of the light engine projection area and have certain distances in both horizontal and vertical directions.

In embodiments, after obtaining the light engine projection area, the projection device can determine the projection range corresponding to the light engine based on the light engine projection area, and remove other ranges beyond the projection range from the detection range of the distance measuring sensor to obtain the security detection range.

S1220: Remove detection data beyond the security detection range from the detection data of the distance measuring sensor to obtain the detection data within the security detection range.

In embodiments, since the detection data of the distance measuring sensor includes all data within the detection range, the detection data beyond the security detection range is invalid data. Then, after obtaining the security detection range, the projection device can remove the detection data beyond the security detection range to obtain the detection data within the security detection range.

It should be noted that the detection data of the distance measuring sensor may vary during each collection of throw distance, so in order to obtain reliable detection data, multiple consecutive frames of latest detection data need to be recorded in a stable state of the projection device. The multiple consecutive frames include a current frame and adjacent frames prior to the current frame. For example, if the multiple consecutive frames are 10 frames, the multiple consecutive frames include the current frame and 9 frames adjacent to the current frame.

Optionally, the detection data of the distance measuring sensor can be obtained by weighting and summing the multiple consecutive frames of detection data.

For example, the projection device can fit and filter the multiple consecutive frames of detection data, and then weight and sum the fitted and filtered multiple consecutive frames of detection data to obtain the detection data of the distance measuring sensor.

In embodiments, due to external environmental interferences (such as electromagnetic interference produced by surrounding electronic devices, and measurement errors induced by changes in light), there may be noise and fluctuations in the multiple consecutive frames of detection data. In view of this, the projection device can smooth the multiple consecutive frames of detection data through a relevant fitting and filtering algorithm, to remove noise and abnormal fluctuations from the detection data. The relevant fitting and filtering algorithm may be a least squares method, a Kalman filtering algorithm, or the like.

After obtaining the fitted and filtered multiple consecutive frames of detection data, the projection device can determine a weight of each frame of detection data based on time differences between the multiple consecutive frames and the current frame. Next, the projection device can calculate a product of each frame of detection data and the corresponding weight, and add the corresponding products of the multiple frames to obtain a weighted sum result. Then the weighted sum result is used as the detection data of the distance measuring sensor.

In embodiments, the security detection range within the detection range of the distance measuring sensor is determined based on the light engine projection area, and the detection data beyond the security detection range is removed from the detection data of the distance measuring sensor to obtain the detection data within the security detection range. In the above method, by focusing the security detection range on the light engine projection area, invalid detection data can be accurately filtered out from the detection data, achieving more targeted detection of data within the security detection range in the subsequent target detection process.

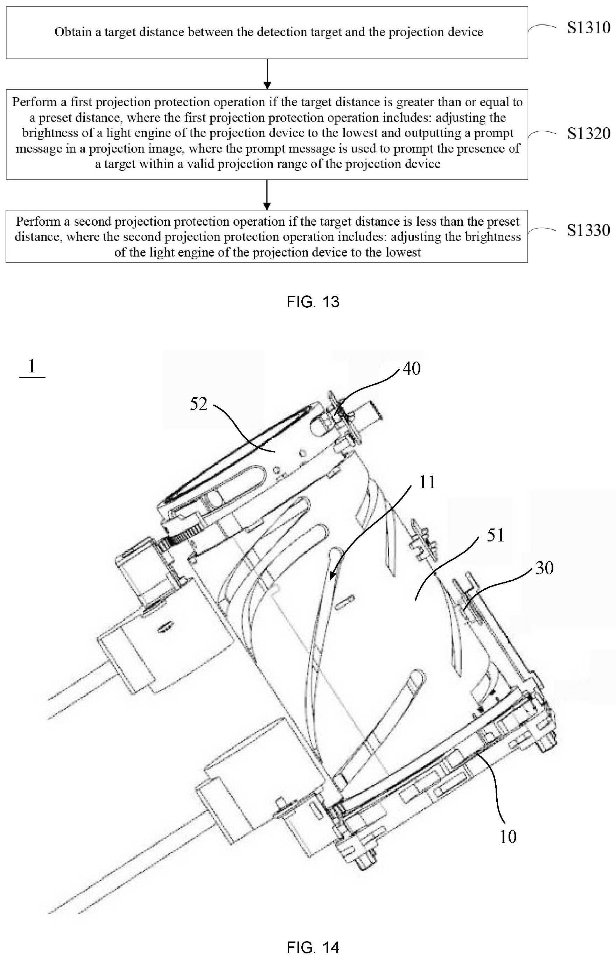

In one embodiment, as shown in FIG. 13, S830 of performing a projection protection operation includes:
S1310: Obtain a target distance between the detection target and the projection device.

In embodiments, assuming that the detection target within the security detection range is stationary, the projection device can obtain a throw distance with a large information difference from the adjacent throw distances, and designate a shorter throw distance among the adjacent throw distances as the target distance between the detection target and the projection device. Alternatively, the projection device can select a minimum throw distance from multiple valid throw distances collected by the distance measuring sensors, and designate the minimum throw distance as the target distance between the target and the projection device.

Assuming that the detection target within the security detection range is moving, the projection device may need to use the distance measuring sensors for distance measurements to obtain multiple measured throw distances in time series, and designate a minimum throw distance from the multiple measured throw distances in time series as the target distance between the detection target and the projection device.

Optionally, the projection device can perform the projection protection operation based on a comparison result between the target distance and a preset distance.

In embodiments, the projection protection operation performed by the projection device is different for two situations: urgent and more urgent. Thus, the projection device can compare the target distance with the preset distance to determine whether the target distance is greater than the preset distance. For example, the preset distance may be 10 centimeters.

For example, if the target distance is greater than or equal to the preset distance, the distance between the target and the light engine of the projection device is moderate or relatively far, the situation is considered more urgent, and the projection protection operation corresponding to the more urgent situation is performed. If the distance to the target is less than the preset distance, the distance between the target and the light engine of the projection device is relatively close, the situation is considered urgent, and the projection protection operation corresponding to the urgent situation is performed.

S1320: Perform a first projection protection operation if the target distance is greater than or equal to a preset distance, where the first projection protection operation includes: adjusting the brightness of a light engine of the projection device to the lowest and outputting a prompt message in a projection image, where the prompt message is used to prompt the presence of a target within a valid projection range of the projection device.

Optionally, when it is determined that the target distance is greater than or equal to the preset distance, the distance between the target and the light engine of the projection device is moderate or relatively far, and the brightness output of the light engine of the projection device will not immediately damage the detection target. In this case, the projection device can adjust the brightness of the light engine to the lowest, avoiding harm to human eyes caused by the brightness of the light engine. If the target is a person, a first prompt message can be output through the projection image of the projection device, where the first prompt message is used to prompt the person to stay away from the security detection range. If the target is an object, a second prompt message can be output through the projection image of the projection device, where the second prompt message is used to prompt an operator to assist the object in moving away from the security detection range.

S1330: Perform a second projection protection operation if the target distance is less than the preset distance, where the second projection protection operation includes: adjusting the brightness of the light engine of the projection device to the lowest.

Optionally, when it is determined that the target distance is less than the preset distance, the situation is considered urgent. At this time, the effectiveness of displaying a prompt on the projection image is relatively low. In this case, the projection device can adjust the brightness of the light engine to the lowest, thereby avoiding security issues caused by the irradiation of strong light on the target, and ensuring projection security.

In embodiments, the target distance between the detection target and the projection device is obtained, and the projection device is controlled to perform the projection protection operation based on the comparison result between the target distance and the preset distance. In the above method, in the presence of a detection target within the determined security detection range, the target distance between the detection target and the projection device is further obtained. With the preset distance as a limiting condition, the distance between the detection target and the projection device can be accurately determined, thereby accurately performing the corresponding projection protection operation based on the determination result.

It should be noted that the above projection methods are all carried out in a stable projection state of the projection device. The projection device in the stable projection state indicates small fluctuations in the throw distance of the projection device and small fluctuations in posture changes of the projection device (such as pitch angle, yaw angle, and roll angle).

It should be understood that, although the steps in the flowcharts of the embodiments as described above are displayed sequentially according to the instructions of arrows, these steps are not necessarily performed sequentially according to the sequence instructed by the arrows. Unless otherwise explicitly specified herein, these steps are not limited in a strict sequence, but may be executed in other sequences. Moreover, at least some of the steps in the flowchart of each embodiment may include a plurality of steps or a plurality of stages. These steps or stages are not necessarily performed at the same time, but may be performed at different time. The steps or stages are not necessarily sequentially performed, but may be performed alternately with other steps or at least some of steps or stages of other steps.

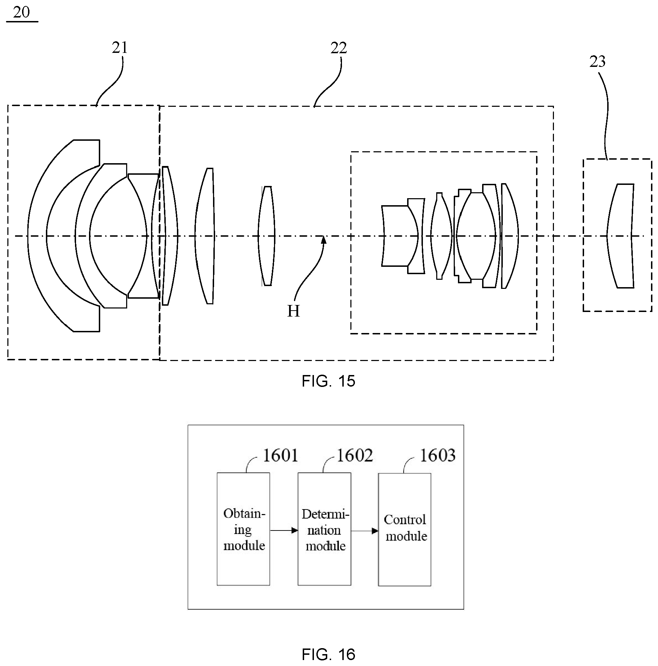

The present disclosure further provides a projection device. As shown in FIG. 14 and FIG. 15, the projection device includes a projection lens 1, and the projection lens 1 includes a lens barrel 10, an optical lens set 20, and a zoom detection assembly 30.

The optical lens set 20 is located inside the lens barrel 10, the optical lens set 20 has a first optical axis H, the optical lens set 20 includes a focus lens set 21 and a zoom lens set 22 arranged in sequence along an extension direction of the first optical axis H, and both the focus lens set 21 and the zoom lens set 22 can slide relative to the lens barrel 10 along the extension direction of the first optical axis H.

The zoom detection assembly 30 includes a zoom motion component and a zoom detection component (not shown), one of the zoom motion component and the zoom detection component is connected to the zoom lens set 22 and follows the movement of the zoom lens set for zooming, the other one of the zoom motion component and the zoom detection component is fixed relative to the lens barrel 10, and the zoom detection component is configured to cooperate with the zoom motion component to detect a movement distance of the zoom lens set 22 relative to the lens barrel 10.

The projection device is configured to obtain a target throw ratio of the projection device, determine a target zoom position corresponding to the target throw ratio based on a preset zoom mapping relationship between throw ratios and zoom positions, control the zoom lens set to perform zoom motion, and sense a zoom magnetic signal through the zoom detection assembly during the zoom motion until the zoom magnetic signal reflects that the zoom lens set has reached the target zoom position, where the zoom magnetic signal has a periodic variation characteristic.

It should be noted that the above projection device is configured to implement the control method for the projection device in any of the foregoing items. The specific content can be found in the foregoing embodiments and will not be repeated here.

In one embodiment, the projection device further includes a focus detection assembly 40. The focus detection assembly 40 includes a focus motion component and a focus detection component (not shown), one of the focus motion component and the focus detection component is connected to the focus lens set 21 and follows the movement of the focus lens set for focusing, the other one of the focus motion component and the focus detection component is fixed relative to the lens barrel 10, and the focus detection component is configured to cooperate with the focus motion component to detect a movement distance of the focus lens set 21 relative to the lens barrel 10.

Specifically, the lens barrel 10 provides a mounting space for the optical lens set 20, both the focus lens set 21 and the zoom lens set 22 may include a lens holder and one or more lenses, the lenses are mounted on the lens holder, and the lens holder is slidably connected to the lens barrel 10 along the extension direction of the first optical axis H, thereby driving the lenses to slide along the extension direction of the first optical axis H. The lens barrel 10 has a front side and a rear side, the distance between the front side of the lens barrel 10 and an object to be photographed is relatively short, while the distance between the rear side of the lens barrel 10 and the object to be photographed is relatively long. The focus lens set 21 can be used as a focus set of the projection lens 1, and is located on the front side of the lens barrel 10, to adjust front and rear positions according to an object distance, achieving clearer imaging. The focus lens set 21 can also be used to correct distortion, thereby improving the imaging quality of the object to be photographed. The zoom lens set 22 can be used as a zoom set of the projection lens 1, and is located between the focus lens set 21 and a fixed lens set 23, that is, located in the middle of the lens barrel 10. The zoom lens set 22 moves to change a focal length of the projection lens 1, so as to change a viewing angle or image size and obtain an effect of zooming in or out.

It should be noted that, in embodiments, one of the zoom motion component and the zoom detection component is arranged on the zoom lens set 22, and the other one of the zoom motion component and the zoom detection component is fixed relative to the lens barrel 10. Meanwhile, one of the focus motion component and the focus detection component is arranged on the focus lens set 21, and the other one of the focus motion component and the focus detection component is fixed relative to the lens barrel 10. When the projection lens 1 is in the process of focusing and zooming, the focus motion component cooperates with the focus detection component to detect the movement distance required for the focusing of the projection lens 1, and the zoom motion component cooperates with the zoom detection component to detect the movement distance required for the zooming of the projection lens 1, so that the focus lens set 21 and the zoom lens set 22 can be directly driven to desired adjustment positions, thereby achieving the focusing and zooming functions of the projection lens 1. In this embodiment, the arrangement of the focus detection assembly 40 and the zoom detection assembly 30 on different optical assemblies can shorten the time required for the focusing and zooming process of the projection lens 1 and improve the focusing and zooming accuracy of the projection lens 1.

As shown in FIG. 15, in some embodiments, the optical lens set 20 further includes a fixed lens set 23 fixed to the lens barrel 10; and the focus lens set 21, the zoom lens set 22, and the fixed lens set 23 are arranged in sequence along the extension direction of the first optical axis H. One of the zoom motion component and the zoom detection component is connected to the zoom lens set 22, the other one of the zoom motion component and the zoom detection component is connected to the fixed lens set 23, and the zoom detection component is configured to cooperate with the zoom motion component to detect a distance between the zoom lens set 22 and the fixed lens set 23; one of the focus motion component and the focus detection component is connected to the focus lens set 21, and the other one of the focus motion component and the focus detection component is connected to the fixed lens set 23, and the focus detection component is configured to cooperate with the focus motion component to detect a distance between the focus lens set 21 and the fixed lens set 23.

Specifically, the fixed lens set 23 can provide a setting basis for a portion of the zoom detection assembly 30 and a portion of the focus detection assembly 40. The fixed lens set 23 is located on the rear side of the lens barrel 10 and can provide a basic focal power for the optical lens set 20. The fixed lens set 23 remains fixed and can further provide a reference for the movement of the zoom lens set 22 and the focus lens set 21.

In some embodiments, the zoom detection component is a first sensor, the zoom motion component is a first magnet, and the first sensor is configured to sense a magnetic signal of the first magnet to detect the distance between the zoom lens set 22 and the fixed lens set 23. The first magnet may be a magnetic strip.

Specifically, when the position of the first magnet moves, the magnetic field of the first magnet moves with the first magnet, and the magnetic field strength sensed by the first sensor changes. At this time, the zoom lens set 22 can be directly driven in the projection lens 1 to move to a position of a preset magnetic field strength sensed by the first sensor, thereby completing a zooming process of the projection lens 1 and capturing a clear image.

Similarly, in some embodiments, the focus detection component is a second sensor, the focus motion component is a second magnet, and the second sensor is configured to sense a magnetic signal of the second magnet to detect the distance between the focus lens set 21 and the fixed lens set 23.

When the position of the second magnet moves, the magnetic field of the second magnet moves with the second magnet, and the magnetic field strength sensed by the second sensor changes. At this time, the focus lens set 21 can be directly driven in the projection lens 1 to move to a position of a preset magnetic field strength sensed by the second sensor, thereby completing a focusing process of the projection lens 1. For example, both the first sensor and the second sensor are tunnel magneto resistance (TMR) sensors. The TMR sensors have good temperature stability, higher sensitivity, lower power consumption, and better linearity. Therefore, the application of the TMR sensors further optimizes the focusing and zooming performance of the projection lens 1.

Furthermore, in some embodiments, the first magnet is a magnetic strip, that is, the first magnet is composed of multiple segments of magnetic blocks connected end to end, the first magnet has a plurality of N poles and a plurality of S poles, and the N poles and the S poles of the first magnet are alternately arranged along the extension direction of the first optical axis H, so that the magnetic field generated by the first magnet is of a periodic sine waveform. The first sensor senses the periodically changing magnetic field to measure the distance between the zoom lens set 22 and the fixed lens set 23 more accurately, and the periodically changing magnetic field can also effectively reduce external interference, thereby improving the zooming accuracy and stability of the projection lens 1. Through the magnetic field of the periodic sine waveform, the first sensor can not only accurately measure the distance to ensure the zooming stability and accuracy, but also maintain high sensitivity in complex environments to reduce errors and enable the projection lens 1 to present clear images at different focal lengths, thereby significantly improving the imaging quality of the projection lens 1.

In some embodiments, as shown in FIG. 14, the projection lens 1 further includes a first transmission component 51 and a second transmission component 52, the first transmission member 51 is movably connected to the lens barrel 10 and is in transmission connection with the zoom lens set 22, and the first transmission component 51 is configured to drive the zoom lens set 22 to slide along the extension direction of the first optical axis H; the second transmission component 52 is movably connected to the lens barrel 10 and is in transmission connection with the focus lens set 21, and the second transmission component 52 is configured to drive the focus lens set 21 to slide along the extension direction of the first optical axis H.

In some embodiments, the second transmission component 52 can be driven by a motor to accurately control the movement of the focus lens set 21, thereby ensuring focusing accuracy; and the first transmission component 51 can be driven by a stepper motor to achieve delicate zooming of the zoom lens set 22. Therefore, the first transmission component cooperates with the second transmission component to improve the overall performance of the projection lens 1. For example, the second transmission component 52 is a focusing ring, the first transmission component 51 is a zooming cylinder, both the focusing ring and the zooming cylinder are rotatably connected to the lens barrel 10, the focusing ring can rotate and drive the focus lens set 21 to slide along the extension direction of the first optical axis H in the lens barrel 10, and the zooming cylinder can rotate and drive the zoom lens set 22 to slide along the extension direction of the first optical axis H, thereby achieving independent control on focusing and zooming of the projection lens 1.

As shown in FIG. 14, in some embodiments, the lens barrel 10 is provided with a curved groove 11, the first sensor is connected to the zoom lens set 22 and slides along the curved groove 11, and the first sensor moves towards the extension direction of the first optical axis when sliding in the curved groove 11. It is easy to understand that the curved groove 11 can provide guidance for the first sensor, allowing accurate movement of the first sensor in the curved groove 11 according to a preset curve trajectory, and ensuring that the imaging quality of the projection lens 1 is not affected during zooming.

In some embodiments, a maximum sliding distance of the zoom lens set 22 along the extension direction of the first optical axis H is greater than 30 mm.

Specifically, in the sliding zooming process of the zoom lens set 22, the zoom motion component and the zoom detection component can provide real-time feedback on data required for the zooming of the projection lens 1 by detecting displacement changes of the zoom lens set 22. For example, the zoom motion component is arranged on the zoom lens set 22, and the zoom detection component is arranged on the fixed lens set 23. In the zooming process of the projection lens 1, due to the large range of the maximum sliding distance of the zoom lens set 22, the displacement of the zoom motion component is also large, thereby reducing errors generated when the zoom detection component detects the displacement of the zoom motion component, ensuring data accuracy, optimizing zooming accuracy, improving imaging quality, and meeting high requirements in complex photographing environments.

In some embodiments, a maximum sliding distance of the focus lens set 21 along the extension direction of the first optical axis H is less than 5 mm. The focus lens set 21 can be used as a focus set with a short maximum sliding distance, which can ensure efficient operation in limited space and improve focusing speed. Meanwhile, due to the short maximum sliding distance of the focus lens set 21, the second magnet can be made of magnetic iron to reduce production costs.

Based on the same inventive concept, an embodiment further provides a control apparatus for a projection device for implementing the foregoing control method for the projection device. The implementation solution provided by the apparatus to solve the problem is similar to the implementation solution described in the foregoing method. Therefore, the specific limitations in one or more embodiments of the control apparatus for the projection device, provided below, can refer to the limitations of the foregoing control method for the projection device. Details will not be repeated here.

In one embodiment, as shown in FIG. 16, a control apparatus for a projection device is provided. A projection lens of the projection device includes a zoom lens set, a focus lens set, and a zoom detection assembly. The control apparatus includes an obtaining module 1601, a determination module 1602, and a control module 1603, where
the obtaining module 1601 is configured to obtain a target throw ratio of the projection device;
the determination module 1602 is configured to determine a target zoom position corresponding to the target throw ratio based on a preset zoom mapping relationship between throw ratios and zoom positions; and
the control module 1603 is configured to control the zoom lens set to perform zoom motion, and sense a zoom magnetic signal through the zoom detection assembly during the zoom motion until the zoom magnetic signal reflects that the zoom lens set has reached the target zoom position, where the zoom magnetic signal has a periodic variation characteristic.

The various modules in the foregoing control apparatus for the projection device can be fully or partially implemented through software, hardware, and a combination thereof. The modules can be embedded in or independent of a processor in a computer device in a form of hardware, or stored in a memory of a computer device in a form of software, whereby the processor calls the modules to perform operations corresponding to the modules.

In an exemplary embodiment, a projection device is provided, including a memory and a processor, where the memory stores a computer program, and the processor executes the computer program to implement the steps of the control method for the projection device in any of the above items.

In an embodiment, a computer-readable storage medium is provided, storing a computer program that, when executed by a processor, implements the steps of the control method for the projection device in any of the above items.

In an embodiment, a computer program product is provided, including a computer program that, when executed by a processor, implements the steps of the control method for the projection device in any of the above items.

A person of ordinary skill in the art may understand that all or some of the processes in the methods of the foregoing embodiments may be implemented by a computer program instructing relevant hardware. The computer program may be stored in a non-volatile computer-readable storage medium. The computer program, when executed, may include the processes of the embodiments of the above methods. Any reference to the memory, the database, or other medium used in embodiments may all include a non-volatile or volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may be a random access memory (RAM), an external cache, or the like. As an illustration and not a limitation, the RAM may be in various forms, such as a static random access memory (SRAM) or a dynamic random access memory (DRAM). The database involved in embodiments may include at least one of a relational database and a non-relational database. The non-relational database may include, but is not limited to, a blockchain-based distributed database and the like, without limitation herein. The processor involved in embodiments may be a general-purpose processor, a central processing unit, a graphics processing unit, a digital signal processor, a programmable logic device, a data processing logic device based on quantum computing, and the like, but is not limited to this.

Technical features of the foregoing embodiments may be randomly combined. To make description concise, not all possible combinations of the technical features in the foregoing embodiments are described. However, the combinations of these technical features are considered as falling within the scope recorded by this specification provided that no conflict exists.

The foregoing embodiments show merely several implementations of the present invention and are described in detail, which, however, are not to be construed as a limitation to the scope. It should be noted that a person of ordinary skill in the art may make variations and improvements without departing from the concept of the present invention, and these variations and improvements all fall into the scope of protection. The scope of protection is subject to the appended claims.

## Claims

1. A control method for a projection device, wherein a projection lens of the projection device comprises a zoom lens set (22), a focus lens set, and a zoom detection assembly (30), and the method comprises:
- obtaining a target throw ratio of the projection device;
- determining a target zoom position corresponding to the target throw ratio based on a preset zoom mapping relationship between throw ratios and zoom positions; and
- controlling the zoom lens set (22) to perform zoom motion, and sensing a zoom magnetic signal through the zoom detection assembly (30) during the zoom motion until the zoom magnetic signal reflects that the zoom lens set (22) has reached the target zoom position, wherein the zoom magnetic signal has a periodic variation characteristic.

2. The method of claim 1, wherein the zoom detection assembly (30) comprises a zoom detection component and a zoom motion component, the zoom motion component is a first magnet, the first magnet is composed of multiple segments of magnetic blocks connected along an optical axis of the projection lens, and during the movement of the zoom lens set (22), the zoom detection component detects periodically varying zoom magnetic signals generated by the first magnet; and/or
wherein the periodically varying zoom magnetic signals exhibit a sinusoidal periodic variation characteristic.

3. The method of claim 1 or 2, wherein the determining a target zoom position corresponding to the target throw ratio based on a preset zoom mapping relationship between throw ratios and zoom positions comprises:
- determining a target zoom magnetic signal value of the target zoom position based on the zoom mapping relationship;
wherein the controlling the zoom lens set (22) to perform zoom motion and the sensing a zoom magnetic signal comprises:
- determining, based on a current zoom magnetic signal of the zoom lens set (22) and periodic variation data of the zoom magnetic signal, that the zoom lens set (22) has reached the target zoom position when the zoom magnetic signal reaches the target zoom magnetic signal value.

4. The method of any one of the preceding claims, wherein the controlling the zoom lens set (22) to perform zoom motion until the zoom magnetic signal reflects that the zoom lens set (22) has reached the target zoom position comprises:
- driving the zoom lens set (22) to move through a zoom drive mechanism associated with the zoom lens set (22);
- obtaining a zoom position deviation between a current position of the zoom lens set (22) and the target zoom position; and
- determining that the zoom lens set (22) enters a position area corresponding to the target zoom position when the zoom position deviation is less than a preset position deviation.

5. The method of any one of the preceding claims, wherein the method further comprises:
- controlling the focus lens set to move to a target focus position corresponding to the target throw ratio based on a preset focus mapping relationship between throw ratios and focus positions.

6. The method of claim 5, wherein the projection device further comprises an image capture apparatus, and the controlling the focus lens set to move to a target focus position corresponding to the target throw ratio based on a preset focus mapping relationship between throw ratios and focus positions comprises:
- determining an initial focus position corresponding to the target throw ratio based on the target throw ratio and the focus mapping relationship;
- determining, based on the initial focus position, a reference focus position for obtaining a projection image, wherein the projection image is obtained by the image capture apparatus; and
- controlling the focus lens set to move to the target focus position based on the reference focus position.

7. The method of claim 6, wherein the controlling the focus lens set to move to the target focus position based on the reference focus position comprises:
- driving the focus lens set to move from the reference focus position to a direction of the initial focus position through a focus drive mechanism associated with the focus lens set, and obtaining multiple frames of projection images at different positions;
- determining a position corresponding to a maximum clarity image from the multiple frames of projection images as the target focus position; and
- controlling the focus lens set to move to the target focus position.

8. The method of claim 7, wherein the obtaining multiple frames of projection images at different positions comprises:
- obtaining a reference exposure value of the image capture apparatus under exposure compensation;
- configuring the reference exposure value as an exposure parameter of the image capture apparatus; and
- capturing the multiple frames of projection images through the image capture apparatus when the focus lens set moves to different positions,
wherein preferably the controlling the focus lens set to move to the target focus position comprises:
- determining a backup focus position based on the target focus position, wherein a spacing distance between the backup focus position and the target focus position satisfies a preset spacing distance; and
- driving the focus lens set to move from the backup focus position to a direction of the target focus position through the focus drive mechanism associated with the focus lens set until the focus lens set enters a position area corresponding to the target focus position.

9. The method of any one of the preceding claims, wherein the projection device further comprises a distance measuring sensor, and the method further comprises:
- determining a light engine projection area on a projection plane based on the target throw ratio;
- determining, based on the light engine projection area, detection data corresponding to a security detection range from detection data of the distance measuring sensor, wherein the security detection range comprises the light engine projection area; and
- performing a projection protection operation when the detection data within the security detection range reflects the presence of a detection target within the security detection range.

10. The method of claim 9, wherein the determining a light engine projection area on a projection plane based on the target throw ratio comprises:
- obtaining the detection data of the distance measuring sensor and determine a projectable area on the projection plane based on the detection data; and
- determining the light engine projection area on the projection plane based on the throw ratio and the projectable area,
wherein preferably the determining, based on the light engine projection area, detection data corresponding to a security detection range from detection data of the distance measuring sensor, comprises:
- determining an area within a detection range of the distance measuring sensor that overlaps with a projection range corresponding to the light engine projection area as the security detection range; and
- removing detection data beyond the security detection range from the detection data of the distance measuring sensor to obtain the detection data within the security detection range.

11. The method of claim 9, wherein the performing a projection protection operation comprises:
- obtaining a target distance between the detection target and the projection device;
- performing a first projection protection operation if the target distance is greater than or equal to a preset distance, wherein the first projection protection operation comprises: adjusting the brightness of a light engine of the projection device to the lowest and outputting a prompt message in a projection image, wherein the prompt message is used to prompt the presence of a target within a valid projection range of the projection device; and
- performing a second projection protection operation if the target distance is less than the preset distance, wherein the second projection protection operation comprises: adjusting the brightness of the light engine of the projection device to the lowest.

12. A projection device, wherein the projection device comprises a projection lens, and the projection lens comprises a lens barrel (10), an optical lens set (20), and a zoom detection assembly (30), wherein
- the optical lens set (20) is located inside the lens barrel (10), the optical lens set (20) has a first optical axis, the optical lens set (20) comprises a zoom lens set (22) and a focus lens set arranged along an extension direction of the first optical axis, and both the zoom lens set (22) and the focus lens set can slide relative to the lens barrel (10) along the extension direction of the first optical axis;
- the zoom detection assembly (30) comprises a zoom motion component and a zoom detection component, one of the zoom motion component and the zoom detection component is connected to the zoom lens set (22) and follows the movement of the zoom lens set (22) for zooming, the other one of the zoom motion component and the zoom detection component is fixed relative to the lens barrel (10), and the zoom detection component is configured to cooperate with the zoom motion component to detect a movement distance of the zoom lens set (22) relative to the lens barrel (10); and
- the projection device is configured to obtain a target throw ratio of the projection device, determine a target zoom position corresponding to the target throw ratio based on a preset zoom mapping relationship between throw ratios and zoom positions, control the zoom lens set (22) to perform zoom motion, and sense a zoom magnetic signal through the zoom detection assembly (30) during the zoom motion until the zoom magnetic signal reflects that the zoom lens set (22) has reached the target zoom position, wherein the zoom magnetic signal has a periodic variation characteristic.

13. The projection device of claim 12, wherein the projection lens further comprises:
- a focus detection assembly (40), wherein the focus detection assembly (40) comprises a focus motion component and a focus detection component, one of the focus motion component and the focus detection component is connected to the focus lens set and follows the movement of the focus lens set for focusing, the other one of the focus motion component and the focus detection component is fixed relative to the lens barrel (10), and the focus detection component is configured to cooperate with the focus motion component to detect a movement distance of the focus lens set relative to the lens barrel (10).

14. The projection device of claim 13, wherein the optical lens set (20) further comprises a fixed lens set fixed to the lens barrel (10); the focus lens set, the zoom lens set (22), and the fixed lens set are arranged in sequence along the extension direction of the first optical axis, wherein
- one of the zoom motion component and the zoom detection component is connected to the zoom lens set (22), the other one of the zoom motion component and the zoom detection component is connected to the fixed lens set, and the zoom detection component is configured to cooperate with the zoom motion component to detect a distance between the zoom lens set (22) and the fixed lens set; and
- one of the focus motion component and the focus detection component is connected to the focus lens set, and the other one of the focus motion component and the focus detection component is connected to the fixed lens set, and the focus detection component is configured to cooperate with the focus motion component to detect a distance between the focus lens set and the fixed lens set.

15. The projection device of claim 13 or 14, wherein the zoom motion component comprises a first magnet, the zoom detection component comprises a first sensor, and the first sensor is configured to sense a magnetic signal of the first magnet to detect the movement distance of the zoom lens set (22) relative to the lens barrel (10); and
- the focus detection component comprises a second sensor, the focus motion component comprises a second magnet, and the second sensor is configured to sense a magnetic signal of the second magnet to detect the movement distance of the focus lens set relative to the lens barrel (10),
wherein preferably the first magnet is composed of multiple segments of magnetic blocks connected end to end, and a plurality of N poles and a plurality of S poles of the first magnet are alternately arranged along the extension direction of the first optical axis.
